(19) Europäisches Patentamt

European Patent Office

Office européen des brevets

(11) **EP 1 598 680 A2**

(12) **DEMANDE DE BREVET EUROPEEN**

(43) Date de publication:
**23.11.2005 Bulletin 2005/47**

(51) Int Cl.7: **G01T 1/24**

(21) Numéro de dépôt: **05102496.6**

(22) Date de dépôt: **30.03.2005**

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **31.03.2004 FR 0450627**

(71) Demandeur: **COMMISSARIAT A L'ENERGIE ATOMIQUE**
**75752 Paris Cedex 15 (FR)**

(72) Inventeurs:
• **MONTEMONT, Guillaume**
  **38000, GRENOBLE (FR)**
• **OUVRIER-BUFFET, Patrice**
  **74410, SAINT-JORIOZ (FR)**
• **VERGER, Loick**
  **38000, GRENOBLE (FR)**

(74) Mandataire: **Poulin, Gérard et al**
**Société BREVATOME**
**3, rue du Docteur Lancereaux**
**75008 Paris (FR)**

(54) **Système d'acquisition de spectres avec intégrateur à adaptation de seuil**

(57)     L'invention concerne un procédé d'exploitation d'un signal fourni par un détecteur, dans lequel :

a - on détermine le temps passé par au moins une partie du signal au-dessus d'une valeur S0 d'un premier seuil,
b - on détermine la charge correspondant à la partie du signal pendant ce temps,
c - on détermine une nouvelle valeur S'0 du premier seuil en fonction de la charge et du temps ainsi déterminés,
d - on réitère au moins une fois les étapes a et b à l'aide de la nouvelle valeur du premier seuil.

FIG. 6

EP 1 598 680 A2

**Description**

**DOMAINE TECHNIQUE ET ART ANTERIEUR**

L'invention concerne le domaine de la spectrométrie, notamment X ou gamma à l'aide d'un détecteur semi-conducteur.

De tels détecteurs comportent souvent des défauts de collection des porteurs de charge.

Une spectrométrie du rayonnement incident permet de déterminer la quantité de porteurs de charges créés par l'interaction du photon, par exemple X ou gamma.

A cette fin, on applique un champ électrique au matériau détecteur à l'aide d'électrodes de manière à drainer ces charges et induire un signal électrique d'amplitude proportionnel à leur quantité. Malheureusement, la mesure de cette quantité de porteurs est rendue difficile par les propriétés de transport imparfaites du semi-conducteur : en effet, une partie des charges ne parviennent pas jusqu'aux électrodes. C'est le problème de collection incomplète.

En outre, en particulier dans le cas du CdZnTe, les propriétés de transport des trous sont particulièrement mauvaises tandis que celles des électrons sont bonnes.

On mesure alors un signal qui correspond au transit des électrons dans le matériau.

Une des techniques proposées pour corriger cette correction incomplète, due au mauvais transport des trous, est d'effectuer un traitement électronique du signal mesuré.

En plus de la mesure d'amplitude mesurant la charge totale collectée, la mesure d'un ou plusieurs autres paramètres sur la forme du signal électrique obtenu (par exemple son temps de montée) permet en particulier de remonter au lieu d'interaction du photon dans le milieu semi-conducteur.

Grâce à un étalonnage de l'efficacité de collecte en fonction du lieu d'interaction, on peut alors déterminer la charge réellement déposée par le photon.

C'est la méthode bi-paramétrique « électrons » décrite dans le document FR - 2738919.

Le temps de montée peut être déterminé de différentes manières.

Une première méthode consiste à mesurer le temps écoulé entre le passage du signal de charge par un seuil de déclenchement (réalisé par un comparateur) déterminant le début de l'impulsion et son arrivée à son amplitude maximale (mesurée grâce à un détecteur de crête).

Une autre méthode consiste à travailler sur le signal de courant (obtenu à l'aide d'un circuit dérivateur). On mesure alors le temps écoulé entre le passage du courant au-dessus d'une valeur seuil et son retour en dessous de ce même seuil. Cette méthode a l'avantage d'être précise et facile à réaliser puisqu'elle utilise un comparateur et un convertisseur temps-amplitude.

Ces méthodes ont toutefois des limitations, en particulier en ce qui concerne la linéarité des mesures sur une dynamique de signaux importante. De plus, on pourra les paramétrer de manière à minimiser le bruit uniquement autour de certaines valeurs de signal.

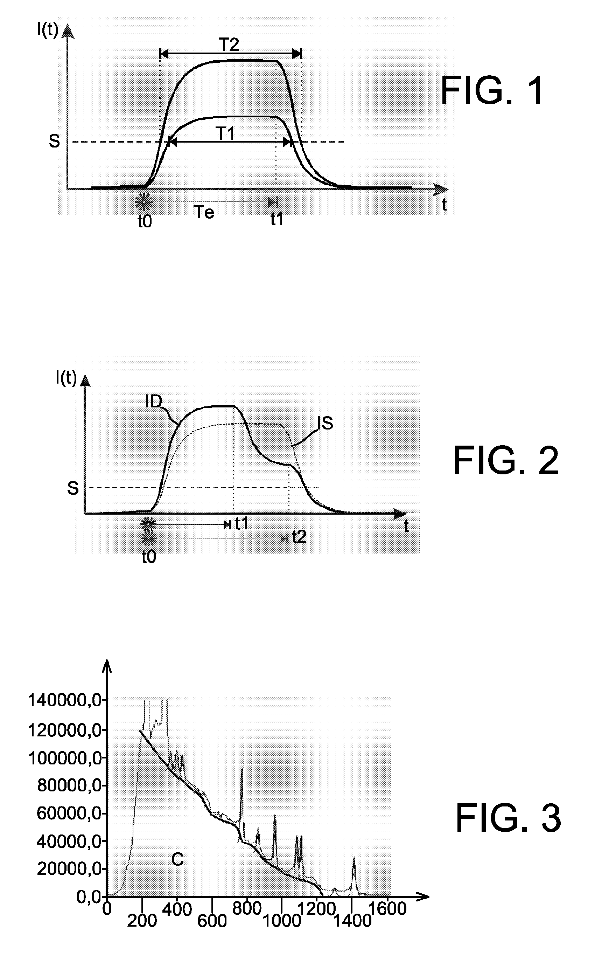

La figure 1, qui montre deux impulsions de courant, donne une explication du problème dans le cas de la deuxième méthode exposée ci-dessus.

Sur cette figure, Te est le temps de transit des électrons pour un lieu d'interaction donné : T2 est le temps mesuré pour une énergie importante et T1 dans le cas d'une impulsion d'énergie plus faible.

Du fait des constantes de temps du système (imposées par la nécessité de filtrer le bruit) on a T1<T2<Te.

On obtiendra donc des temps mesurés différents entre eux et différents du temps de transit des électrons, qui est en principe unique.

De plus, en terme de bruit, il y aura une position de seuil optimum (en général, là où la pente est maximale). Or, cette position ne pourra être respectée que pour une certaine valeur d'amplitude.

Il y a, en fait, un compromis à faire entre dynamique et bruit : le filtrage limite le bruit mais réduit la stabilité des performances sur une grande dynamique.

Une deuxième limitation des méthodes classiques est l'impossibilité de traiter des impulsions complexes, dues par exemple aux interactions multiples.

Une interaction double ID est représentée en figure 2, la courbe IS représentant une interaction simple. Dans un tel cas, la méthode bi-paramétrique est mise en défaut.

Deux photons incidents d'énergies différentes vont donner le couple amplitude/temps mesuré.

La méthode bi-paramétrique classique échoue donc à identifier les énergies.

Il serait intéressant d'identifier ces cas d'impulsions multiples pour éviter de dégrader les spectres.

De plus, la possibilité de séparer les contributions des 2 nuages d'électrons est intéressante pour reconnaître les interactions simples des interactions multiples et identifier plus facilement les pics sur un continuum Compton.

En effet, dans la gamme d'énergie 100keV - 1000keV, les 2 types d'interactions importants sont l'effet photoélectrique (le photon est totalement absorbé) et l'effet Compton (diffusion avec dépôt d'une fraction d'énergie).

Les interactions simples permettent d'obtenir une meilleure résolution en énergie tandis que les interactions doubles ont de fortes probabilités de correspondre à des photons Compton réabsorbés et donc d'appartenir à un pic de dépôt complet.

La combinaison des deux informations offre la possibilité de réduire le continuum Compton tout en améliorant la résolution.

Enfin une troisième limitation est la suivante. Tous les détecteurs ne fournissent pas un courant de forme « plate ». Pour les géométries couramment utilisées, le courant croît lorsque les électrons se rapprochent de l'anode. Il est donc nécessaire d'appliquer un seuil de fin d'impulsion plus haut que le seuil de début d'impulsion pour optimiser la performance. La mesure n'en est donc pas facilitée.

## EXPOSÉ DE L'INVENTION

L'invention concerne d'abord un procédé d'exploitation d'un signal, notamment en courant, fourni par un détecteur, dans lequel :

    a - on détermine le temps passé par au moins une partie du signal au-dessus d'une valeur $S0$ d'un premier seuil,
    b - on détermine la charge correspondant à la partie du signal pendant ce temps,
    c - on détermine une nouvelle valeur $S'0$ du premier seuil en fonction de la charge et du temps ainsi déterminés,
    d - on réitère au moins une fois les étapes a et b à l'aide de la nouvelle valeur du premier seuil.

Selon un mode de réalisation particulier, un procédé selon l'invention comporte en outre les étapes suivantes :

    a1- on détermine le temps passé par une deuxième partie du signal au-dessus d'une valeur $S1$ d'un deuxième seuil,
    b1- on détermine la charge correspondant à la partie du signal pendant ce temps,
    c1- on détermine une nouvelle valeur $S'1$ du deuxième seuil en fonction de la charge et du temps ainsi déterminés,
    d1- on réitère au moins une fois les étapes a1 et b1 à l'aide de la nouvelle valeur du deuxième seuil.

L'invention concerne également un procédé d'exploitation d'un signal, notamment en courant,fourni par un détecteur, dans lequel :

    a- on définit un premier seuil de début de signal et un deuxième seuil de fin de signal,
    b- on détermine l'intervalle de temps entre l'instant auquel le début du signal atteint le premier seuil et l'instant auquel la fin du signal atteint le deuxième seuil,
    c- on détermine la charge correspondant à la partie du signal pendant cet intervalle de temps,
    d- on détermine de nouvelles valeurs du premier seuil et du deuxième seuil, en fonction de la charge et de l'intervalle ainsi déterminés,
    e- on réitère les étapes b et c avec ces nouvelles valeurs.

L'invention concerne également un procédé d'exploitation d'un signal, notamment en courant, fourni par un détecteur, comportant une première composante superposée à une deuxième composante, dans lequel :

    a- on définit un premier seuil de début de signal, un deuxième seuil de fin de la première composante, et un troisième seuil de fin de la deuxième composante,
    b- on détermine l'intervalle de temps entre l'instant auquel le début du signal atteint le premier seuil et l'instant auquel la fin de la première composante du signal atteint le deuxième seuil, et l'intervalle de temps entre l'instant auquel le début du signal atteint le premier seuil et l'instant auquel la fin de la deuxième composante du signal atteint le troisième seuil,
    c- on détermine une première et une deuxième charges correspondant chacune au signal pendant l'intervalle de temps correspondant,
    d- on détermine de nouvelles valeurs du premier seuil, du deuxième seuil et du troisième seuil, en fonction des valeurs de charge et d'intervalles de temps ainsi déterminés,
    e- on réitère les étapes b et c avec ces nouvelles valeurs.

Quel que soit le mode de réalisation envisagé, le procédé selon l'invention met donc en oeuvre une réadaptation, à l'aide de l'estimation précédente de la charge et du temps de transit, de la valeur du seuil servant à la mesure de temps et d'amplitude.

L'invention concerne donc également un procédé de spectrométrie avec correction bi-paramétrique adaptative, de préférence à l'aide de moyens numériques.

Les nouvelles valeurs de seuils peuvent être calculées à partir de données de référence préalablement mémorisées.

La réitération peut avoir lieu jusqu'à ce qu'au moins un écart entre deux valeurs successives d'au moins une des charges déterminées et/ou du temps passé au-dessus d'au moins un des seuils et/ou d'un des intervalles de temps soit inférieur à une valeur prédéterminée.

Les étapes de détermination de charges peuvent être réalisée par intégration.

Le signal est avantageusement filtré avant intégration.

Les nouvelles valeurs de seuils peuvent être déterminées par procédé analytique, ou par calibration expérimentale ou par modélisation.

Le signal peut être issu d'un détecteur à semi-conducteur, par exemple un détecteur à semi-conducteur CdTe ou CdZnTe.

L'invention concerne également un dispositif d'exploitation d'un signal fourni par un détecteur, comportant :

a - des moyens pour déterminer le temps passé par au moins une partie du signal au-dessus d'une valeur S0 d'un premier seuil,

b - des moyens pour déterminer la charge correspondant à la partie du signal pendant ce temps,

c - des moyens pour déterminer une nouvelle valeur S'0 du premier seuil en fonction de la charge et du temps ainsi déterminés,

d - des moyens pour réitérer au moins une fois les étapes a et b à l'aide de la nouvelle valeur du premier seuil.

Un tel dispositif peut en outre comporter:

a1- des moyens pour déterminer le temps passé par une deuxième partie du signal au-dessus d'une valeur S1 d'un deuxième seuil,

b1- des moyens pour déterminer la charge correspondant à la partie du signal pendant ce temps,

c1- des moyens pour déterminer une nouvelle valeur S'1 du deuxième seuil en fonction de la charge et du temps ainsi déterminés,

d1- des moyens pour réitérer au moins une fois les étapes a1 et b1 à l'aide de la nouvelle deuxième valeur du deuxième seuil.

Selon un autre aspect, l'invention concerne également un dispositif d'exploitation d'un signal fourni par un détecteur, comportant:

a- des moyens pour définir un premier seuil de début de signal et un deuxième seuil de fin de signal,

b- des moyens pour déterminer l'intervalle de temps entre l'instant auquel le début du signal atteint le premier seuil et l'instant auquel la fin du signal atteint le deuxième seuil,

c- des moyens pour déterminer la charge correspondant à la partie du signal pendant cet intervalle de temps,

d- des moyens pour déterminer de nouvelles valeurs du premier seuil et du deuxième seuil, en fonction de la charge et de l'intervalle ainsi déterminés,

e- des moyens pour réitérer les étapes b et c avec ces nouvelles valeurs.

Elle concerne aussi un dispositif d'exploitation d'un signal fourni par un détecteur, comportant : une première composante superposée à une deuxième composante, dans lequel :

a- des moyens pour définir un premier seuil de début de signal, un deuxième seuil de fin de la première composante, et un troisième seuil de fin de la deuxième composante,

b- des moyens pour déterminer l'intervalle de temps entre l'instant auquel le début du signal atteint le premier seuil et l'instant auquel la fin de la première composante du signal atteint le deuxième seuil, et l'intervalle de temps entre l'instant auquel le début du signal atteint le premier seuil et l'instant auquel la fin de la deuxième composante du signal atteint le troisième seuil,

c- des moyens pour déterminer une première et une deuxième charges correspondant chacune au signal pendant l'intervalle de temps correspondant,

d- des moyens pour déterminer de nouvelles valeurs du premier seuil, du deuxième seuil et du troisième seuil, en fonction des valeurs de charge et d'intervalles de temps ainsi déterminés,

e- des moyens pour réitérer les étapes b et c avec ces nouvelles valeurs.

Les moyens pour déterminer la ou les charges peuvent comporter un ou plusieurs intégrateur.

Un tel dispositif selon l'un des modes de réalisation ci-dessus peut comporter en outre des moyens pour filtrer le signal ou les signaux avant intégration.

Les moyens pour déterminer les nouvelles valeurs de seuil peuvent mettre être programmés pour mettre en oeuvre un procédé analytique, ou par calibration expérimentale ou par modélisation.

Un dispositif de détection selon l'invention comporte un détecteur et un dispositif tel que décrit ci-dessus.

**BREVE DESCRIPTION DES FIGURES**

- Les figures 1 et 2 illustrent des cas de superposition d'impulsions ;
- la figure 3 représente un spectre obtenu, avec fond Compton ;
- la figure 4 représente un premier exemple d'un dispositif selon l'invention ;
- les figures 5A-5E représentent un ensemble de signaux de charge et d'intensité en fonction du temps ;
- la figure 6 représente une impulsion et le signal intégré correspondant, avec le positionnement d'un seuil, et la mesure d'une valeur de charge ;
- la figure 7 représente schématiquement un procédé de mesure selon l'invention, dans le cas d'une impulsion double ;
- les figures 8 et 9 représentent d'autres exemples de dispositifs selon l'invention ;
- la figure 10 représente schématiquement un procédé de mesure selon l'invention, dans le cas d'une impulsion issue d'un détecteur à géométrie non plane ;
- la figure 11 représente encore un autre dispositif selon l'invention ;
- la figure 12 représente un intégrateur différentiel.

**EXPOSÉ DETAILLE DE MODES DE REALISATION DE L'INVENTION**

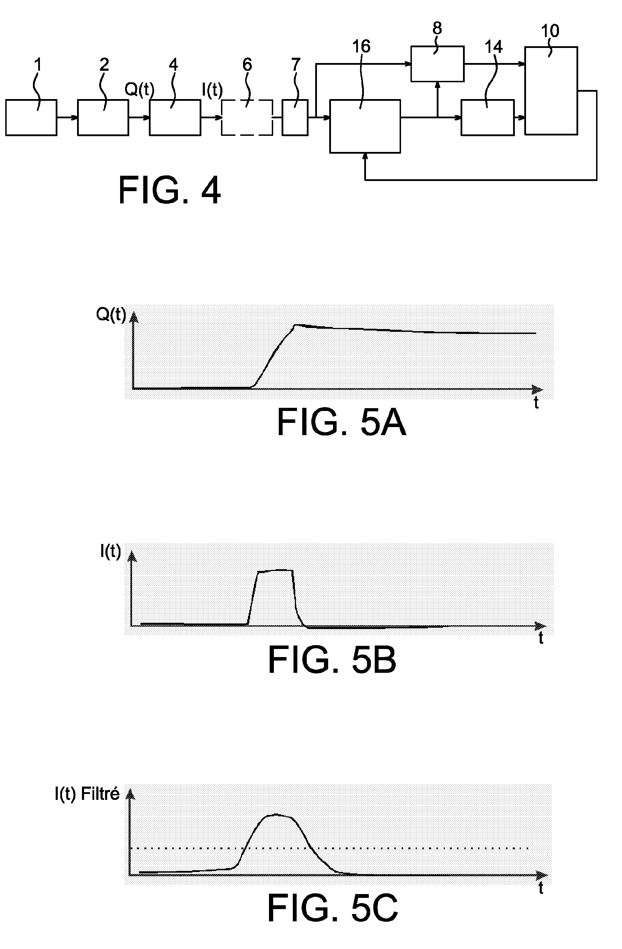

Un premier mode de réalisation de l'invention est illustré en figure 4.

Le système comporte un détecteur 1 de type à semi-conducteur, par exemple dans le domaine de la spectrométrie X ou gamma.

Un préamplificateur 2 de charge, fournit une charge Q (t) à un dérivateur 4, qui permet d'obtenir une impulsion de courant I (t) à partir de la charge Q (t).

Les figures 5A et 5B représentent respectivement les évolutions en temps de I et de Q.

Il comporte en outre des moyens 16 de seuillage, de type comparateur.

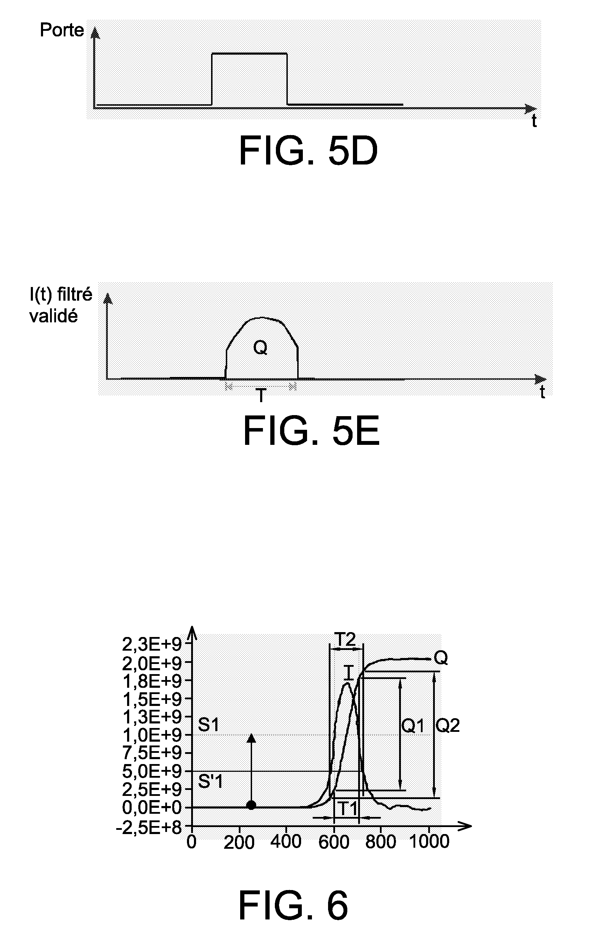

Ces moyens de seuillage permettent donc d'identifier les instants entre lesquels le signal est supérieur à une valeur seuil donnée. Ils produisent un signal logique, par exemple de type porte ou échelon, tel qu'illustré sur la figure 5D.

Ce dispositif permet de mesurer le temps que passe le courant au dessus d'un certain seuil $S_1$, ce qui permet une mesure ou une estimation du temps de transit T (figure 1) des électrons.

Des moyens 14 convertisseur temps-amplitude réalisent cette mesure ou cette estimation de temps à partir du signal logique fourni par les moyens 16 de seuillage.

En électronique analogique, ces moyens 14 peuvent être réalisés en intégrant un courant constant durant l'état actif du signal logique.

En électronique numérique, ces moyens 14 peuvent être réalisés par un compteur d'impulsions d'horloge dont la fréquence est compatible avec la précision désirée.

Un intégrateur commuté 8 intègre le courant sur cette période et fournit donc un signal relatif à la charge correspondante. Cette charge est l'intégrale du signal sur le temps T.

Les informations relatives à la charge et au temps (fournies par les moyens 8 et 14) sont fournies aux moyens 10 de calculs. Ces moyens vont pouvoir calculer ou déterminer un nouveau seuil $S_2$ qui va remplacer le seuil $S_1$ dans les moyens 16, et qui sera mieux adapté à l'impulsion à analyser.

Les moyens 10 de calcul de seuil peuvent être réalisés, en électronique numérique, grâce à un microprocesseur ou une unité arithmétique programmable.

On met donc en oeuvre, pour mesurer l'amplitude, une dérivation du signal de charge Q (t), réintégré ensuite (par les moyens 8) sur la durée mesuré T de l'impulsion, après seuillage.

Le système itère le processus un nombre suffisant de fois pour atteindre une précision désirée : à chaque itération, on utilise une nouvelle valeur de seuil. Le signal a été préalablement mémorisé dans les moyens de mémorisation 7.

De préférence, le système comporte en outre un filtre passe-bas 6 de mise en forme.

Les caractéristiques de ce filtre passe-bas 6 sont déterminées d'après la densité spectrale du bruit de mesure (généré en majeure partie par le détecteur 1 et l'électronique 2 de préamplification). Cette densité spectrale du bruit peut être soit mesurée, soit estimée théoriquement.

La figure 5C donne un exemple du courant I(t) après filtrage.

La réponse impulsionnelle de ce filtre 6 est, selon un mode de réalisation, calculée de manière à ce qu'elle compense la coloration du bruit.

Un filtre 6 à réponse impulsionnelle finie réalisable en électronique numérique, grâce par exemple à des techniques multi-cadences peut aussi convenir et est plus commode à réaliser.

Par ailleurs, dans une structure rebouclée comme celle de la figure 4, l'impulsion en sortie des moyens 6 peut être numérisée et mémorisée dans des moyens de mémorisation 7.

On peut citer différentes méthodes pour déterminer comment les moyens 10 peuvent calculer le nouveau seuil.

Une première méthode est dite analytique. On estime la charge Q de l'impulsion et sa durée T. $S_1$ on suppose que l'impulsion de courant est de forme carrée, le courant moyen I=Q/T donne une bonne estimation du niveau haut de l'impulsion. Pour un filtre de réponse impulsionnelle symétrique, placer le seuil à I/2=Q/2T permettra donc de se caler sur la pente maximale. On affine ainsi la mesure.

Une deuxième méthode est dite « Méthode par calibration expérimentale ».

A l'aide d'un générateur, on envoie en entrée du système des impulsions simulant un détecteur, avec un couple charge et temps (Q,T) connu. On balaye alors le domaine (Q,T) et, pour chaque réglage, on détermine la valeur de seuil permettant d'obtenir une mesure correcte (les Q et T mesurés grâce à ce seuil sont conformes aux Q et T réels de l'impulsion). On est alors capable de « tabuler » la fonction seuil=f(Q,T) sur l'ensemble du domaine. Une mesure de $Q_m$ et $T_m$ sur un signal réel, fournis par les moyens 8,14, permet ensuite de déterminer un seuil S=f($Q_m$, $T_m$).

Une troisième méthode est dite « Méthode par modélisation ». La démarche est similaire mais utilise un modèle d'impulsion bruitée que l'on dérive et filtre (la réponse impulsionnelle du filtre est connue).

On détermine alors, par le calcul, la position de seuil qui permet la meilleure estimation de Q et T, par exemple à l'aide du critère du MAP (Maximum A Posteriori). Il s'agit d'une approche probabiliste qui consiste à placer le seuil à un niveau tel que l'on obtient une estimation de Q et de T avec une probabilité maximale.

Quelle que soit la méthode retenue, on peut numériser le signal soit juste avant le filtrage, soit dès la sortie du préamplificateur 2.

La figure 6 illustre le principe de l'invention. Un premier seuil $S_1$ arbitraire permet de délimiter un intervalle de temps $T_1$ au cours duquel l'intensité I se situe au-dessus du seuil $S_1$. Une première charge $Q_1$ peut alors être calculée, qui va permettre de calculer, avec la valeur de $T_1$, un nouveau seuil $S_2$, à partir duquel un nouvel intervalle $T_2$ est déterminé, ainsi qu'une nouvelle charge Q2, etc....

Comme critère de convergence, et donc d'arrêt des itérations, on peut choisir un écart, inférieur à une valeur prédéterminée, entre deux seuils successifs $S_i$ et $S_{i+1}$ et/ou deux quantités de charges successives $Q_i$ et $Q_{i+1}$.

L'invention concerne également un dispositif et un procédé de spectrométrie avec correction multi-paramétrique pour reconnaissance des interactions multiples.

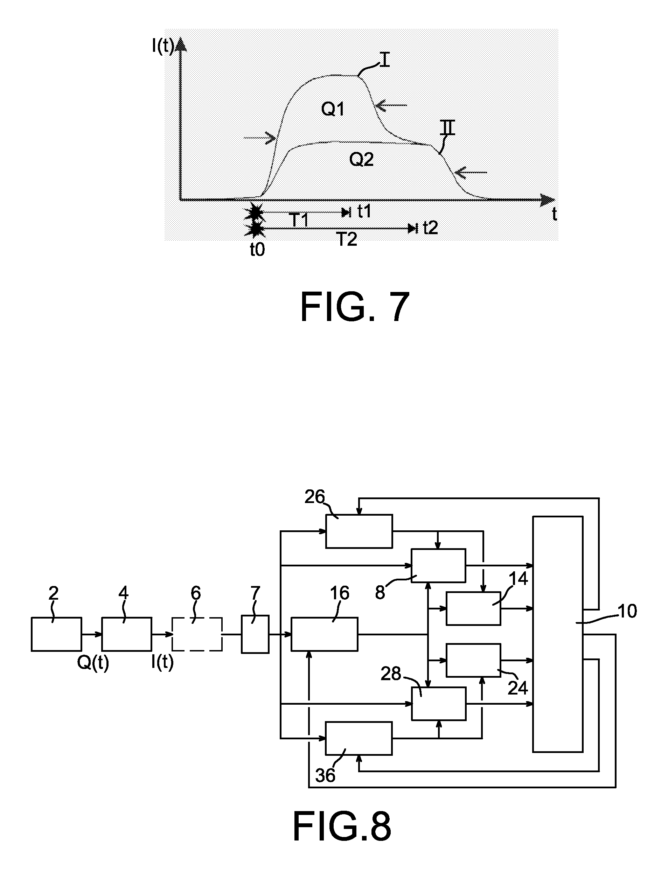

Un tel dispositif est illustré sur la figure 8.

Ce dispositif comporte des éléments similaires à ceux de la figure 4, désignés par des références numériques identiques.

Mais on applique ici plusieurs seuillages, afin de séparer les différentes composantes des impulsions.

Ce système permet notamment de traiter le cas de deux composantes (figure 7): la composante I, de charge Q1 et de durée T1 et la composante II, de charge Q2 et de durée T2.

Pour décomposer l'impulsion, on peut par exemple appliquer 3 seuils : un premier seuil (S1) pour détecter l'instant d'interaction ($t_0$), correspondant au début de l'impulsion ; un deuxième seuil (S2) pour détecter la fin de la composante n°I ($t_1$) et un troisième (S3) pour la fin de la composante n°II ($t_2$).

Le signal est ensuite intégré sur deux périodes (du début à la fin de l'impulsion n°I et du début à la fin de l'impulsion n°II) de manière à évaluer les contributions respectives de Q1 et Q2.

L'intégration sur T2 donne ainsi par exemple Q1+Q2 tandis que l'intégration sur T1 donnera Q1+Q2.T1/T2.

A l'aide de ces 2 données ou équations, on obtient les 2 inconnues Q1 et Q2.

La figure 8 donne un exemple de réalisation d'un tel dispositif. Outre les éléments déjà décrits en liaison avec la figure 4, et pour cette raison désignés par des références identiques, il comporte un deuxième intégrateur 28, un deuxième moyen 24 convertisseur temps-amplitude, ainsi qu'un deuxième et un troisième moyens de seuillage 26,36 (par exemple deux comparateurs).

Les trois seuils $S_1$, $S_2$, $S_3$ sont respectivement associés aux moyens de seuillage 16,26,36.

Les deux premiers seuils permettent de déterminer le début et la fin de la première composante du signal.

Les seuils $S_1$ et $S_3$ permettent de déterminer le début et la fin de la deuxième composante du signal.

Les 3 seuils S1, S2 et S3 sont liés et ajustés par les moyens 10 après calcul des charges $Q_1$ et $Q_2$ et des intervalles $T_1$ et $T_2$ associés à ces composantes.

Là encore, les moyens 10 peuvent être programmés selon l'une des trois méthodes expliquées ci-dessus (méthode analytique, ou par calibration expérimentale ou par modélisation).

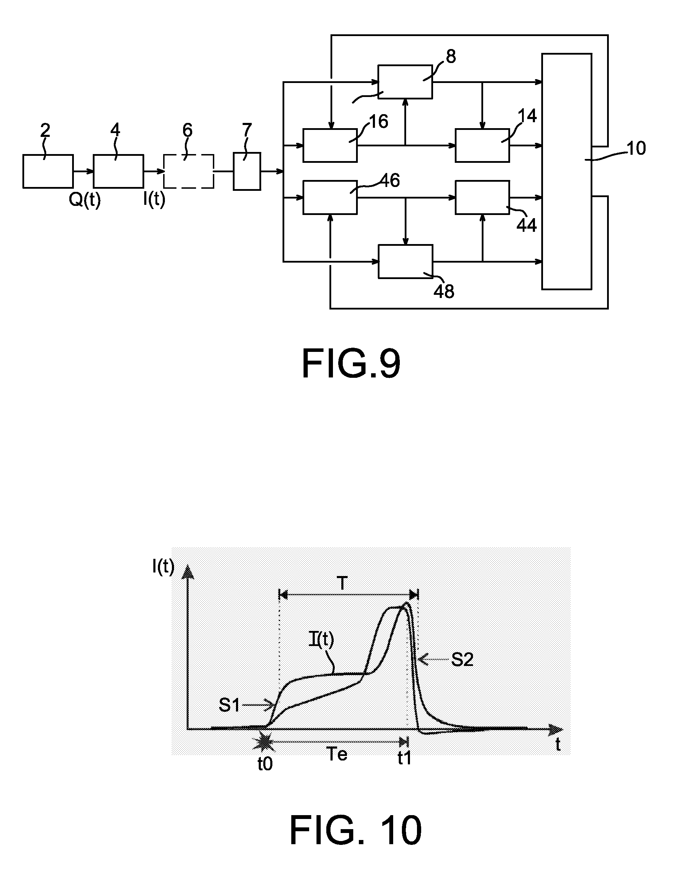

Il est également possible de traiter un signal tel que celui de la figure 7 avec seulement deux seuils. Dans ce cas, le dispositif est par exemple celui de la figure 9, avec deux branchements symétriques similaires à la chaîne de traitement de celle de la figure 4.

Sur cette figure, la référence 46 désigne des moyens de seuillage, la référence 48 un intégrateur, et la référence 44 des moyens convertisseurs temps - amplitude.

Le premier et le deuxième seuils sont réajustés à l'aide des moyens 10 dès lors que les données relatives aux charges et aux durées ont été calculées, et ces valeurs réajustées sont réinjectées dans les moyens de seuillage 16, 46.

Les itérations sont répétées jusqu'à atteinte d'un seuil de convergence prédéterminé. Là encore, on peut retenir, comme critère de convergence, et donc d'arrêt des itérations, un écart, inférieur à une valeur prédéterminée, entre deux seuils successifs $S_i$ et $S_{i+1}$ et/ou deux quantités de charges successives $Q_i$ et $Q_{i+1}$.

L'invention peut également être adaptée aux différentes géométries de détecteurs, notamment de détecteurs à géométrie non plane, donnant des signaux de formes plus complexe.

Dans ce cas, on traite différemment le début et la fin de l'impulsion, avec une valeur de seuil de début et une valeur de seuil de fin qui sont différentes l'une de l'autre.

On adopte aussi, préférentiellement, un filtrage préalable de l'impulsion pour obtenir un signal à flancs plus raides, de manière à optimiser la précision de la mesure de temps.

Comme illustré sur la figure 10, deux seuils $S_1$ et $S_2$ permettent d'identifier respectivement le début et la fin d'une impulsion. $t_0$ et $t_1$ représentent respectivement les instants de l'interaction dans le détecteur et d'arrivée des charges à l'anode de ce même détecteur.

Les seuils $S_1$ et $S_2$ définissent une durée T entre le début et la fin de l'impulsion.

La charge Q correspondant à la différence entre les intégrales de la courbe filtrée (de 0 à T2) et la courbe réelle (de 0 à T1) est calculée (voir formule de la page suivante).

Les valeurs de Q et T sont entrées dans les moyens 110 de calcul qui vont déterminer de nouvelles valeurs de seuil $S'_1$ et $S'_2$ de début et de fin d'impulsion. Il s'ensuit un nouveau calcul de charge Q', un nouvel intervalle de temps T', à leur tour entrés dans les moyens 10 de calcul.

Les itérations sont répétées jusqu'à atteinte d'un seuil de convergence prédéterminé.

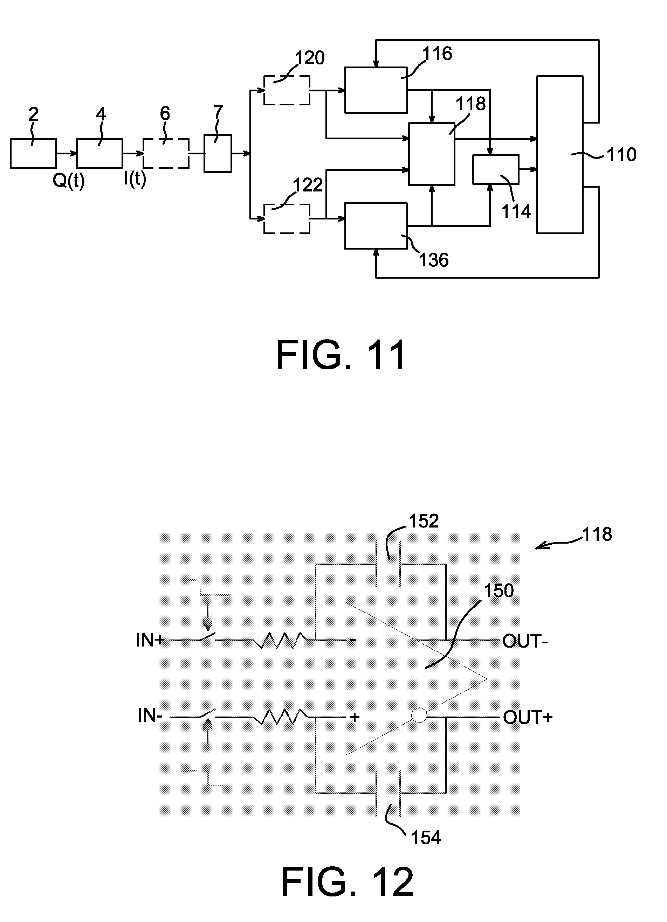

Un dispositif pour la mise en oeuvre de ce procédé est illustrée en figure 11 et comporte deux dispositifs 116,136 de seuillage (par exemple deux comparateurs), un intégrateur différentiel commuté 118, un convertisseur 114 temps-amplitude, des moyens 110 de calcul. Eventuellement deux filtres 120,122 de mise en forme de début et de fin de signal peuvent être disposés dans la chaîne de mesure.

Concrètement, le filtrage peut être déterminé de la manière suivante.

On établit d'abord un modèle de la forme du courant détecteur au moment de la transition (ce qui peut être fait sous forme numérique ou sous forme analytique, par une équation différentielle par exemple).

On détermine ensuite la réponse du filtre linéaire transformant cette forme en un échelon, ce qui consiste à réaliser une opération mathématique de déconvolution.

Un intégrateur différentiel commuté 118 réalise la différence des intégrales des 2 signaux entrants entre les deux dates de début et fin.

Il peut être réalisé analogiquement de la manière illustrée en figure 12 à l'aide d'un amplificateur 150 à entrée et sortie différentielle et de deux capacités 152, 154 montées comme indiqué sur la figure.

Le calcul réalisé correspond à la formule :

$$Q = \int_0^{t\text{début}} IN_+(t)\,dt - \int_0^{t\text{fin}} IN_-(t)\,dt$$

Quel que soit le mode de réalisation envisagé, l'invention aboutit à la détermination d'un couple (charge Q, durée T) qui permet de remonter à l'énergie du photon incident grâce à une courbe d'étalonnage établie à l'aide d'une source calibrée en énergie. La valeur de Q résultante est en principe proportionnelle à l'énergie pour un temps T donné.

Un procédé mettant en oeuvre la détermination de l'énergie des photons en fonction de la charge et du temps de montée mesurés est décrit dans FR - 2 738 919.

Les moyens 10, 110 de calcul peuvent mémoriser une table de correspondance qui permet, au cours des mesures ultérieures, de connaître le seuil à appliquer pour remonter, par itération, à la charge représentative du phénomène d'interaction.

Pour une charge Q mesurée et un temps T obtenu, par exemple par comparaison du signal avec un seuil S, on recherche dans la table ou dans les moyens 10, 110 le couple (Q, T) et on obtient le seuil S' correspondant, lui-même réinjecté comme valeur de seuil dans le comparateur etc.

**Revendications**

1. Procédé d'exploitation d'un signal fourni par un détecteur, dans lequel :

   a - on détermine le temps passé par au moins une partie du signal au-dessus d'une valeur S0 d'un premier seuil,
   b - on détermine la charge correspondant à la partie du signal pendant ce temps,
   c - on détermine une nouvelle valeur S'0 du premier seuil en fonction de la charge et du temps ainsi déterminés,
   d - on réitère au moins une fois les étapes a et b à l'aide de la nouvelle valeur du premier seuil.

2. Procédé selon la revendication 1, dans lequel :

   a1- on détermine le temps passé par une deuxième partie du signal au-dessus d'une valeur S1 d'un deuxième seuil,
   b1- on détermine la charge correspondant à la partie du signal pendant ce temps,
   c1- on détermine une nouvelle valeur S'1 du deuxième seuil en fonction de la charge et du temps ainsi déterminés,
   d1- on réitère au moins une fois les étapes a1 et b1 à l'aide de la nouvelle valeur du deuxième seuil.

3. Procédé d'exploitation d'un signal fourni par un détecteur, dans lequel :

   a- on définit un premier seuil de début de signal et un deuxième seuil de fin de signal,
   b- on détermine l'intervalle de temps entre l'instant auquel le début du signal atteint le premier seuil et l'instant auquel la fin du signal atteint le deuxième seuil,
   c- on détermine la charge correspondant à la partie du signal pendant cet intervalle de temps,
   d- on détermine de nouvelles valeurs du premier seuil et du deuxième seuil, en fonction de la charge et de l'intervalle ainsi déterminés,
   e- on réitère les étapes b et c avec ces nouvelles valeurs.

4. Procédé d'exploitation d'un signal fourni par un détecteur, comportant une première composante superposée à une deuxième composante, dans lequel :

   a- on définit un premier seuil de début de signal, un deuxième seuil de fin de la première composante, et un troisième seuil de fin de la deuxième composante,
   b- on détermine l'intervalle de temps entre l'instant auquel le début du signal atteint le premier seuil et l'instant auquel la fin de la première composante du signal atteint le deuxième seuil, et l'intervalle de temps entre l'instant auquel le début du signal atteint le premier seuil et l'instant auquel la fin de la deuxième composante du signal atteint le troisième seuil,
   c- on détermine une première et une deuxième charges correspondant chacune au signal pendant l'intervalle de temps correspondant,
   d- on détermine de nouvelles valeurs du premier seuil, du deuxième seuil et du troisième seuil, en fonction des valeurs de charge et d'intervalles de temps ainsi déterminés,
   e- on réitère les étapes b et c avec ces nouvelles valeurs.

5. Procédé selon l'une des revendications 1 à 4, les nouvelles valeurs de seuils étant calculées à partir de données de référence préalablement mémorisées.

6. Procédé selon l'une des revendications 1 à 5, la réitération ayant lieu un nombre de fois prédéterminé.

7. Procédé selon l'une des revendications 1 à 6, la réitération ayant lieu jusqu'à ce qu'au moins un écart entre deux valeurs successives d'au moins une des charges déterminées et/ou du temps passé au-dessus d'au moins un des seuils et/ou d'un des intervalles de temps soit inférieur à une valeur prédéterminée.

8. Procédé selon l'une des revendications 1 à 7, les étapes de détermination de charges étant réalisée par intégration.

**9.** Procédé selon la revendication 8, le signal étant filtré avant intégration.

**10.** Procédé selon l'une des revendications 1 à 9, les nouvelles valeurs de seuils étant déterminées par procédé analytique, ou par calibration expérimentale ou par modélisation.

**11.** Procédé selon l'une des revendications 1 à 10, le signal étant issu d'un détecteur (1) à semi-conducteur.

**12.** Procédé selon l'une des revendications 1 à 11 le signal étant issu d'un détecteur à semi-conducteur CdTe ou CdZnTe.

**13.** Procédé selon l'une des revendications 11 ou 12, le signal provenant de l'interaction d'un rayonnement X ou gamma avec le détecteur.

**14.** Dispositif d'exploitation d'un signal fourni par un détecteur, comportant :

a - des moyens (16, 14, 116) pour déterminer le temps passé par au moins une partie du signal au-dessus d'une valeur S0 d'un premier seuil,
b - des moyens (8, 16, 116, 118) pour déterminer la charge correspondant à la partie du signal pendant ce temps,
c - des moyens (10, 110) pour déterminer une nouvelle valeur S'0 du premier seuil en fonction de la charge et du temps ainsi déterminés,
d - des moyens pour réitérer au moins une fois les étapes a et b à l'aide de la nouvelle valeur du premier seuil.

**15.** Dispositif selon la revendication 14, comportant en outre:

a1- des moyens (46, 44) pour déterminer le temps passé par une deuxième partie du signal au-dessus d'une valeur S1 d'un deuxième seuil,
b1- des moyens (46, 48) pour déterminer la charge correspondant à la partie du signal pendant ce temps,
c1- des moyens (10) pour déterminer une nouvelle valeur S'1 du deuxième seuil en fonction de la charge et du temps ainsi déterminés,
d1- des moyens pour réitérer au moins une fois les étapes a1 et b1 à l'aide de la nouvelle deuxième valeur du deuxième seuil.

**16.** Dispositif d'exploitation d'un signal fourni par un détecteur, comportant:

a- des moyens (116, 136) pour définir un premier seuil de début de signal et un deuxième seuil de fin de signal,
b- des moyens (114) pour déterminer l'intervalle de temps entre l'instant auquel le début du signal atteint le premier seuil et l'instant auquel la fin du signal atteint le deuxième seuil.
c- des moyens (118) pour déterminer la charge correspondant à la partie du signal pendant cet intervalle de temps,
d- des moyens (110) pour déterminer de nouvelles valeurs du premier seuil et du deuxième seuil, en fonction de la charge et de l'intervalle ainsi déterminés,
e- des moyens pour réitérer les étapes b et c avec ces nouvelles valeurs.

**17.** Dispositif d'exploitation d'un signal fourni par un détecteur, comportant : une première composante superposée à une deuxième composante, dans lequel :

a- des moyens (16, 26, 36) pour définir un premier seuil de début de signal, un deuxième seuil de fin de la première composante, et un troisième seuil de fin de la deuxième composante,
b- des moyens (14, 24) pour déterminer l'intervalle de temps entre l'instant auquel le début du signal atteint le premier seuil et l'instant auquel la fin de la première composante du signal atteint le deuxième seuil, et l'intervalle de temps entre l'instant auquel le début du signal atteint le premier seuil et l'instant auquel la fin de la deuxième composante du signal atteint le troisième seuil,
c- des moyens (8, 28) pour déterminer une première et une deuxième charges correspondant chacune au signal pendant l'intervalle de temps correspondant,
d- des moyens (10) pour déterminer de nouvelles valeurs du premier seuil, du deuxième seuil et du troisième seuil, en fonction des valeurs de charge et d'intervalles de temps ainsi déterminés,
e- des moyens pour réitérer les étapes b et c avec ces nouvelles valeurs.

**18.** Dispositif selon l'une des revendications 14 à 17, les moyens (8, 28, 48, 118), pour déterminer la ou les charges comportant un ou plusieurs intégrateur(s).

**19.** Dispositif selon l'une des revendications 14 à 18, comportant en outre des moyens (6) pour filtrer le signal ou les signaux avant intégration.

**20.** Dispositif selon l'une des revendications 14 à 19, les moyens (10, 110) pour déterminer les nouvelles valeurs de seuil mettant eu oeuvre un procédé analytique, ou par calibration expérimentale ou par modélisation.

**21.** Dispositif de détection comportant un détecteur (1) à semi-conducteur et un dispositif selon l'une des revendications 14 à 20.

FIG. 1

FIG. 2

FIG. 3

FIG. 4

FIG. 5A

FIG. 5B

FIG. 5C

Porte

FIG. 5D

I(t) filtré
validé

Q

T

FIG. 5E

FIG. 6

FIG. 7

FIG.8

FIG.9

FIG. 10

# FIG. 11

# FIG. 12